# EUROPÄISCHE PATENTSCHRIFT

(11) **EP 0 867 995 B1**
(45) Veröffentlichungstag und Bekanntmachung des Hinweises auf die Patenterteilung: **11.07.2001**
(21) Anmeldenummer: 98104747.5
(22) Anmeldetag: 17.03.1998
(51) Int. Cl.: H02G 3/16, H01R 13/502, H01R 13/658

(54) **Anschlussdose für abgeschirmte Kabel**
Connection box for shielded cable
Boîte de raccordement pour cable blindé

(30) Priorität: 26.03.1997 DE 19712630
(43) Veröffentlichungstag der Anmeldung: 30.09.1998
(73) Patentinhaber: BTR BLUMBERGER TELEFON- UND RELAISBAU ALBERT METZ, D-78176 Blumberg (DE)
(72) Erfinder: Metz, Albert, 78176 Blumberg (DE); Jaag, Dieter, 78050 VS-Villingen (DE); Stadler, Hermann, 78166 Donaueschingen (DE)
(74) Vertreter: Patentanwälte Westphal, Mussgnug & Partner

(56) Entgegenhaltungen:
- EP-A- 0 295 570
- DE-C- 4 234 451

## Beschreibung

Die Erfindung betrifft eine Anschlußdose für abgeschirmte Kabel gemäß dem Oberbegriff des Anspruchs 1.

Eine Anschlußdose für abgeschirmte Kabel, insbesondere für Datenübertragungskabel dieser Gattung ist aus der DE 42 34 451 C1 /US 5 447 441 bekannt. Diese Anschlußdose weist ein Gehäuse auf, welches aus einem Oberteil und einem Unterteil zusammengesetzt ist, die jeweils als Metalldruckgußteile gefertigt sind. Das Gehäuse nimmt eine Anschlußklemme für die Adern wenigstens eines Kabels auf sowie wenigstens eine Buchse zum Einstecken eines Endgeräte-Steckers. Die Buchsen und die Anschlußklemmen sind über eine Leiterplatte miteinander verbunden. Das Gehäuse umschließt abschirmend die Leiterplatte, die Buchsen und die Anschlußklemme. Die Schirmung des Kabels wird in leitenden Kontakt mit dem metallischen Gehäuse gebracht, wobei eine durchgehende Masseverbindung für die Abschirmung von der Kabelschirmung über Unterteil und Oberteil des Gehäuses sowie über die Leiterplatte mit der Buchse besteht. Die freiliegenden Teile der Adern, der Anschlußklemme und der Leiterplatte sind vollständig abgeschirmt umschlossen, so daß Streustrahlung und Streusignale weder aus der Anschlußdose nach außen austreten können, noch Störsignale von außen in die Anschlußdose eindringen und aufgefangen werden können.

Der Erfindung liegt die Aufgabe zugrunde, eine Anschlußdose dieser Gattung weiter zu verbessern, so daß sie kompakte Einbauabmessungen aufweist und eine einfache Montage ermöglicht.

Diese Aufgabe wird erfindungsgemäß gelöst durch eine Anschlußdose mit den Merkmalen des Anspruchs 1. Vorteilhafte Ausführungen und Weiterbildungen der Erfindung sind in den Unteransprüchen angegeben.

Bei der erfindungsgemäßen Anschlußdose werden die Adern des anzuschließenden Kabels in einen Ladeblock eingeführt, der dann in das Unterteil des Gehäuses eingesetzt wird. Die Leiterplatte mit der Buchse wird in das Oberteil des Gehäuses eingesetzt. Beim Aufsetzen des Oberteils auf das Unterteil dringen Schneid-Klemmkontakte des Oberteils in den Ladeblock und kontaktieren die in diesem angeordneten Adern. Auf diese Weise ergibt sich eine äußerst einfache Montage. Die Adern des anzuschließenden Kabels müssen nur in den Ladeblock eingesteckt werden, was außerhalb des Gehäuses und damit räumlich unbehindert durchgeführt werden kann. Dann wird der Ladeblock in das Unterteil des Gehäuses eingesetzt und in diesem verrastet. Anschließend wird das Oberteil auf das Unterteil des Gehäuses aufgesetzt und mit diesem verschraubt. Beim Aufsetzen des Oberteils dringen die Schneid-Klemmkontakte zwangsläufig in den Ladeblock ein und kontaktieren die Adern, ohne daß hierzu irgendwelche gesonderten Montageeingriffe notwendig sind. Beim Zusammenschrauben von Oberteil und Unterteil des Gehäuses ergibt sich damit automatisch das Anschließen der Adern des Kabels an die Leiterplatte und außerdem die Masseverbindung zwischen Unterteil, Oberteil und Leiterplatte. Vorzugsweise ist dabei nur eine einzige Schraube vorgesehen, um das Oberteil und das Unterteil miteinander zu verbinden und den Anschlußkontakt für die Adern des Kabels herzustellen. Gegebenenfalls kann zusätzlich zu der Schraube noch eine Rastverbindung vorgesehen sein.

Um den Ladeblock in das Unterteil des Gehäuses einzusetzen, wird der Ladeblock vorzugsweise seitlich in das Unterteil eingeschoben und rastet in dem Unterteil ein. Die Adern werden in Bohrungen des Ladeblockes eingeführt, die parallel zu der Richtung verlaufen, in welcher der Ladeblock in das Unterteil des Gehäuses eingeschoben wird. Dadurch kann der Ladeblock sehr flach ausgebildet werden. Dementsprechend ergibt sich eine geringe Einbauhöhe des Unterteils und damit des gesamten Gehäuses. Weiter werden die Bauabmessungen dadurch klein gehalten, daß zum Kontaktieren der Adern nur die Höhe des Ladeblockes benötigt wird, während die Schneid-Klemmkontakte in den Ladeblock eindringen und in diesem aufgenommen werden. Es wird kein zusätzlicher Raum für die Herstellung der Kontaktverbindung benötigt.

Die geringe Bauhöhe der Anschlußdose und ihre kompakten Seitenabmessungen machen es möglich, daß die Anschlußdose in eine herkömmliche genormte Leerdose eingesetzt werden kann.

Im folgenden wird die Erfindung anhand eines in der Zeichnung dargestellten Ausführungsbeispiels näher erläutert. Es zeigen:
- Fig. 1:: Eine perspektivische Ansicht der Anschlußdose von oben mit abgenommenem Kabelschirmdeckel,
- Fig. 2:: eine perspektivische Ansicht der Anschlußdose von unten mit abgenommenem Kabelschirmdeckel,
- Fig. 3:: eine Explosionsdarstellung des oberen Teiles der Anschlußdose,
- Fig. 4:: eine Explosionsdarstellung des unteren Teiles der Anschlußdose,
- Fig. 5:: den unteren und den oberen Teil der Anschlußdose im montierten Zustand vor dem Zusammenfügen,
- Fig. 6:: eine perspektivische Darstellung der montierten Anschlußdose in einem Vertikalschnitt mit abgebrochener Buchse,
- Fig. 7:: eine Fig. 6 entsprechende Darstellung mit vollständiger Buchse,
- Fig. 8.:: eine Fig. 5 entsprechende Ansicht einer abgewandelten Ausführung der Anschlußdose vor dem Zusammenfügen,
- Fig. 9.:: die Anschlußdose der Fig. 8 im zusammengefügten Zustand vor dem Verrasten und
- Fig. 10.:: das Verrasten der Anschlußdose der Fig. 9.

Die Anschlußdose weist ein Gehäuse auf, welches aus einem Unterteil 1 und einem Oberteil 2 zusammengesetzt ist. Das Unterteil 1 und das Oberteil 2 sind jeweils einstückige Metalldruckgußteile.

Das Unterteil 1 des Gehäuses hat die Form eines Quaders, dessen Oberseite offen ist und dessen Unterseite pultförmig abgeschrägt ist. Die beiden Schmalseiten und die größere hintere Längsseite sowie die pultförmig abgeschrägte Unterseite des Unterteils 1 sind geschlossen. Die vordere kleinere Längsseite des Unterteils 1 ist offen und bildet eine Einschuböffnung für einen später beschriebenen Ladeblock.

Das Oberteil 2 hat ebenfalls im wesentlichen die Form eines Quaders, dessen Unterseite offen ist. Die Seitenflächen des Oberteils 2 sind geschlossen. An der Oberseite des Oberteils 2 befindet sich eine gegen die Vorderseite hin offene dachförmige Auswölbung, die zur Aufnahme von später beschriebenen Buchsen dient.

Die Oberkante des Unterteils 1 und die Unterkante des Oberteils 2 greifen an den beiden Schmalseiten und der hinteren Längsseite mit einem Falz 3 ineinander, wenn das Oberteil 2 und das Unterteil 1 zusammengefügt werden. Durch das Eingreifen des Falzes 3 wird verhindert, daß zwischen dem Unterteil 1 und dem Oberteil 2 eine durchgehende Stoßfuge gebildet wird, durch welche hochfrequente elektromagnetische Strahlung durchtreten könnte.

Die obere Kante der vorderen Längsseite des Unterteils 1 und entsprechend die mit dieser in Berührung kommende untere Kante der vorderen Längsseite des Oberteils 2 sind verbreitert ausgebildet. In der Mitte der Oberkante der Längsseite des Unterteils 1 ist ein nach oben abgeschrägter Ansatz 4 angeformt, der beim Zusammensetzen des Gehäuses in eine korrespondierend ausgeformte Ausnehmung 5 des Oberteils 2 eingreift. In dem Ansatz 4 ist eine Gewindebohrung 6 vorgesehen, in welche eine Schraube 7 eingreift, die im Oberteil 2 sitzt. Beim Zusammenfügen des Gehäuses wird die Schraube 7 in die Gewindebohrung 6 eingedreht, um das Oberteil 2 und das Unterteil 1 zusammenzuziehen und in Eingriff zu bringen. Beiderseits des Ansatzes 4 sind auf der Oberseite der vorderen Längskante des Unterteils 1 jeweils ein Zentrierzapfen 8 angeordnet, der in jeweils eine korrespondierende Zentrierbohrung 9 des Oberteils eingreift, um zusätzlich eine exakte Führung von Oberteil 2 und Unterteil 1 beim Zusammensetzen zu bewirken.

An der rückwärtigen Längsseite sind zur zuverlässigen Verbindung von Unterteil 1 und Oberteil 2 zusätzlich zwei metallische Rastfedern 10 vorgesehen. Die Rastfedern 10 sind Blattfedern, die jeweils an ihrem oberen und unteren Ende herausgebogene Rastnasen 11 aufweisen. An der Innenseite der hinteren Längswand des Unterteils 1 sind zwei Aufnahmetaschen 12 angeformt, in welche die Rastfedern 10 von oben eingesteckt werden und mittels ihrer unteren Rastnasen 11 verrasten. Beim Aufsetzen des Oberteils 2 auf das Unterteils 1 führen die Rastfedern 10 das Oberteil 2 im Bereich der hinteren Längswand und rasten schließlich mit ihren oberen Rastnasen 11 in Rastdurchbrüche 13 der Rückwand des Oberteils 2 ein.

In die offene vordere Längsseite des Unterteils 1 ist ein Ladeblock 14 einschiebbar. Der Ladeblock 14 besteht aus Kunststoff und hat im wesentlichen die Form eines Quaders. In der vorderen Stirnfläche des Ladeblocks 14 sind Aufnahmebohrungen 15 angeordnet, die in zwei übereinander angeordneten gegeneinander versetzten Reihen senkrecht zur Stirnfläche in den Ladeblock 14 führen. In der oberen Fläche des Ladeblockes 14 sind Kontaktkanäle 16 ausgebildet, die senkrecht zur oberen Fläche in den Ladeblock 14 führen. Die Kontaktkanäle 16 sind in zwei gegeneinander versetzten Reihen in der Weise angeordnet, daß jeder Kontaktkanal 16 jeweils senkrecht eine der Aufnahmebohrungen 15 im Inneren des Ladeblockes 14 schneidet. Die Kontaktkanäle 16 haben die Form von unter 45° gegen die Achse der Aufnahmebohrungen 15 schräg gestellten Schlitzen.

Im hinteren Bereich des Ladeblockes 14 ist mittig an dessen Unterseite ein Rastvorsprung 17 ausgebildet, der nach unten aus der unteren Fläche des Ladeblocks vorragt. An der Unterseite der vorderen Stirnfläche des Ladeblocks 14 ist ein Kragen 18 angeformt, der nach unten über die untere Fläche des Ladeblocks 14 übersteht. Der Kragen 18 weist zwei Aufnahmemulden 19 für die anzuschließenden Kabel auf. Am Ansatz des Kragens 18 weist dieser drei beabstandete Zentrierdurchbrüche 20 auf, die mit Zentriervorsprüngen 21 korrespondieren, die unterhalb der Einschuböffnung des Unterteils 1 an diesem angeformt sind. Wird der Ladeblock 14 in das Unterteil 1 eingeschoben, so dringen die Zentriervorsprünge 21 des Unterteils 1 in die Zentrierdurchbrüche 20 des Ladeblocks 14 ein, um diesen exakt in dem Unterteil zu positionieren. Der Rastvorsprung 17 greift hinter eine innere Querwand 22 des Unterteils 1, um den Ladeblock 14 auch in Einschubrichtung zu positionieren und zu fixieren.

In die offene Unterseite des Oberteils 2 wird eine Trägerplatte 23 eingesetzt, die die offene Unterseite des Oberteils 2 abschließt. In die aus Kunststoff bestehende Trägerplatte 23 sind Schneid-Klemmkontakte 24 in einer Anordnung eingesetzt, die zur der Anordnung der Kontaktkanäle 16 des Ladeblocks 14 korrespondiert. Die Schneid-Klemmkontakte 24 sind dementsprechend in zwei gegeneinander versetzten Reihen angeordnet und unter 45° schräg gestellt. Wird das Oberteil 2 auf das Unterteil 1 aufgesetzt, so dringen die Schneid-Klemmkontakte 24 in die Kontaktkanäle 16 des Ladeblocks 14 ein. Auf der Trägerplatte 23 sitzt eine Leiterplatte 25, die im wesentlichen mit der Trägerplatte 23 flächengleich ist. Die Schneid-Klemmkontakte 24 sind nach oben über die Trägerplatte hinaus mit Lötpins 26 verlängert. Die Lötpins 26 durchdringen die Leiterplatte 25 und sind mit deren Leiterbahnen verlötet. Rasthaken 27 am Außenumfang der Trägerplatte 23 greifen in Ausparungen der Leiterplatte 25, um diese auf der Trägerplatte 23 zu positionieren und zu fixieren.

Auf die Leiterplatte 25 sind eine oder mehrere Buchsen 28 aufgesetzt, im dargestellten Ausführungsbeispiel sind zwei Buchsen 28 vorgesehen. Die Buchsen 28 sind im dargestellten Ausführungsbeispiel als Western-Buchsen ausgebildet, die zum Einstecken von Endgerätesteckern dienen. Die Buchsen 28 sind so auf der Leiterplatte 25 aufgesetzt, daß ihre Einsteckrichtung unter 45° zur Ebene der Leiterplatte 25 verläuft. Die Buchsen 28 sitzen mit Lötpins in Bohrungen 29 der Leiterplatte 25 und sind mit den Leiterbahnen der Leiterplatte 25 verlötet und über diese mit dem Lötpins 26 der Schneid-Klemmkontakt 24 verbunden. Die Buchsen 28 sind von einem Abschirmblech 30 umschlossen, welches auch den Massekontakt der Buchsen 28 bildet. Das Abschirmblech 30 sitzt mit Zapfen 31 in der Leiterplatte 25 und ist mit diesen Zapfen 31 mit den Massebahnen der Leiterplatte 25 verlötet.

Die Trägerplatte 23 mit der Leiterplatte 25 und den Buchsen 28 wird als zusammengesetzte Montageeinheit von unten in das Oberteil 2 eingesetzt und mit diesem vernietet. Durch die Nietverbindung wird der Massekontakt zwischen der Leiterplatte 25 und dem Oberteil 2 hergestellt. Die Buchsen 28 befinden sich dadurch in dem dachförmig ausgewölbten oberen Bereich des Oberteils 2 und ihre Einstecköffnung ist durch die offene Einsteckseite des Oberteils 2 zugänglich.

Auf das Oberteil 2 des Gehäuses wird eine Abdeckung 32 aus Kunststoff aufgesetzt. Die Abdeckung 32 umschließt den oberen Bereich des Oberteils 2 und läßt die offene Eintrittsfläche für die Buchsen 28 frei. An den beiden Schmalseiten weist die Abdeckung 32 einstückig angeformte Schenkel 33 auf, die sich seitlich an das Oberteil 2 anlegen. In den Schenkeln 33 sind jeweils zwei Rastdurchbrüche 34 ausgespart, mit welchen die Schenkel 33 über Rastnasen 35 schnappen, welche außen an den Schmalseitenflächen des Oberteils 2 angeformt sind. Die Abdekkung 32 wird von oben auf das Oberteil 2 gedrückt, wobei die Schenkel 33 mit den Rastdurchbrüchen 34 auf den Rastnasen 35 einrasten, so daß die Abdeckung 32 fest auf dem Oberteil gehalten ist. Weiter sind an den Schenkeln 33 nach außen abstehende Rastfedern 36 angeformt, mit welchen die Abdeckung 32 und damit die gesamte Anschlußdose in dem Rahmen einer Leerdose, zum Beispiel einer Unterputzdose eingeschnappt werden kann.

Die zu den Einstecköffnungen der Buchsen 28 führenden Aussparungen der Abdeckung 32 sind durch Staubschutzklappen 37 verschließbar, die schwenkbar in der Abdeckung 32 gelagert sind und in Vertiefungen 38 in der Schließstellung mit Rastwarzen 39 verrasten können. Außerdem sind in der Abdeckung 32 Kennzeichnungen 40 einrastbar, die die den jeweiligen Buchsen 28 zugeordneten Dienste markieren. Im dargestellten Ausführungsbeispiel ist die eine Buchse 28 an ein Fernsprechnetz und die andere Buchse 28 an ein Datennetz angeschlossen, was durch entsprechende Symbole gekennzeichnet ist.

Beim Einschieben der zusammengesetzten Montageeinheit in das Oberteil 2 stützen sich die Buchsen 28 bei Erreichen der Endlage an den Vorsprüngen 41 ab.

An der pultförmig abgeschrägten Unterseite des Unterteils 1 sind mittels einer Kunststofflasche 42 unverlierbar eine Zugentlastungsbride 43 und eine Schirmbride 44 angebracht. Die Zugentlastungsbride 43 und die Schirmbride 44 sind jeweils als federnde Metallstreifen ausgebildet, die parallel zueinander angeordnet sind und jeweils mittig mittels einer Schraube an dem Unterteil 1 befestigbar sind. Die Bodenseite des Unterteils 1 und dessen offene vordere Längsseite werden durch einen Schirmdeckel 45 aus Metall verschlossen. Der Schirmdekkel 45 greift mit seiner oberen Kante unter eine Nase 46 des Unterteils 1 und unten ist der Schirmdeckel 45 abgewinkelt, so daß er unter die Bodenfläche des Unterteils 1 greift. In dem abgewinkelten Bereich weist der Schirmdeckel 45 einen überlappenden Rand 47 auf, an welchem Ösen 48 angebracht sind, in welche Schrauben einsetzbar sind, um den Schirmdeckel 45 in Gewindebohrungen 49 der Bodenfläche des Unterteils 1 zu befestigen.

Die dargestellte Anschlußdose mit zwei Buchsen 28 ist zum Anschließen von zwei abgeschirmten Kabeln 50 bestimmt. Die Kabel werden von der hinteren Seite entlang der pultförmig abgeschrägten Bodenfläche des Unterteils 1 zugeführt. Die Kabel 50 werden mittels der Zugentlastungsbride 43 an dem Unterteil 1 festgelegt und gehalten. Die Zugentlastungsbride 41 hält die Kabel 50 mit ihrer Isolierung an dem Boden des Unterteils 1 fest. Vor der Zugentlastungsbride 43 wird der isolierende Außenmantel der Kabel 50 entfernt, so daß die Kabelschirmung 51 freiliegt. Die Kabelschirmung 51 wird mittels der Schirmbride 44 gegen die Bodenfläche des Unterteils 1 gedrückt, um einen guten Massekontakt zwischen der Kabelschirmung 51 und dem Metall des Unterteils 1 herzustellen. Das vordere Ende der Kabelschirmung 51 legt sich in die Aufnahmemulden 19 des Kragens 18 des Ladeblockes 14. Am vorderen Ende der Kabel 50 wird die Kabelschirmung 51 entfernt, so daß die Adern 52 freiliegen. Die Adern 52 werden in die Aufnahmebohrungen 15 des Ladeblockes 14 eingeführt und durch die in den Ladeblock 14 eingreifenden Schneid-Klemmkontakte 24 kontaktiert.

Zur Montage der Anschlußdose werden an den Enden der Kabel 50 zunächst die Kabelschirmung 51 und die Adern 52 freigelegt. Dann werden die Adern 52 in die Aufnahmebohrungen 15 des Ladeblockes 14 eingeführt, wobei sich der Ladeblock 14 noch außerhalb des Gehäuses befindet, so daß das Einführen der Adern 52 bequem durchgeführt werden kann. Anschließend wird der Ladeblock 14 mit dem eingesetzten Adern 52 in das Unterteil 1 eingeschoben und verrastet. Anschließend werden die Kabel 50 mittels der Zugentlastungsbride 43 an dem Unterteil 1 fixiert und die Kabelschirmung 51 wird mittels der Schirmbride 44 in Kontakt mit dem Unterteil 1 gebracht. Nun wird das Oberteil 2 auf das Unterteil 1 aufgesetzt, wobei die Schneid-Klemmkontakte 24 in die Kontaktkanäle 16 des Ladeblocks 14 eintaucht. Das exakte Aufsetzen des Oberteils 2 auf das Unterteil 1 und damit das Einführen der Schneid-Klemmkontakte 24 in die Kontaktkanäle 16 wird durch die Zentrierzapfen 8 und die Zentrierbohrungen 9 begünstigt. Anschließend wird die Schraube 7 in die Gewindebohrung 6 eingedreht, wodurch das Oberteil 2 gegen das Unterteil 1 gezogen wird. Dabei dringen die Schneid-Klemmkontakte 24 in die Kontaktkanäle 16 ein und kontaktieren die Adern 52. Das Durchschneiden der Isolierung der Adern 52 durch die Schneid-Klemmkontakte 24 erfolgt aufgrund der Gewindesteigung der Schraube 7 mit geringem Kraftaufwand. Sobald das Unterteil 1 und das Oberteil 2 mittels der Schraube 7 fest zusammengezogen sind, bilden das Unterteil 1 und das Oberteil 2 ein geschlossenes metallisches Gehäuse, welches die Buchsen 28, die Leiterplatte 25 und die Schneid-Klemmkontakte 24 in dem Ladeblock 14 abschirmend umschließt. Der freie Bereich der Adern 52 zwischen der Kabelschirmung 51 und dem Ladeblock 14 wird durch den aufgesetzten Schirmdeckel 45 abgeschirmt. Die Schirmung ist mit einem guten elektrischen Kontakt von der Kabelschirmung 51 über die Schirmbride 44, das Unterteil 1, das Oberteil 2 und die Leiterplatte 25 zu der Schirmung der Buchsen 28 durchgeführt. Die komplett montierte Anschlußdose wird in die Leerdose eingesetzt und mittels der Rastfedern 36 in dieser verrastet.

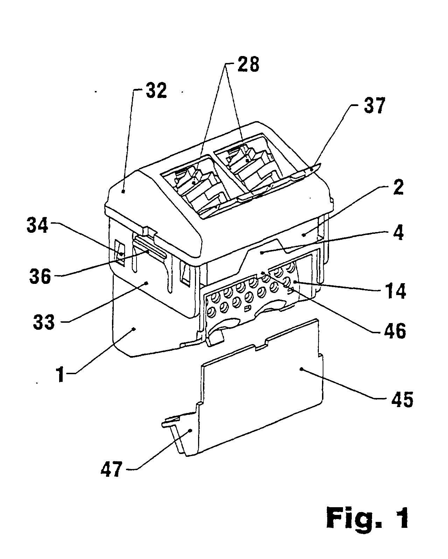

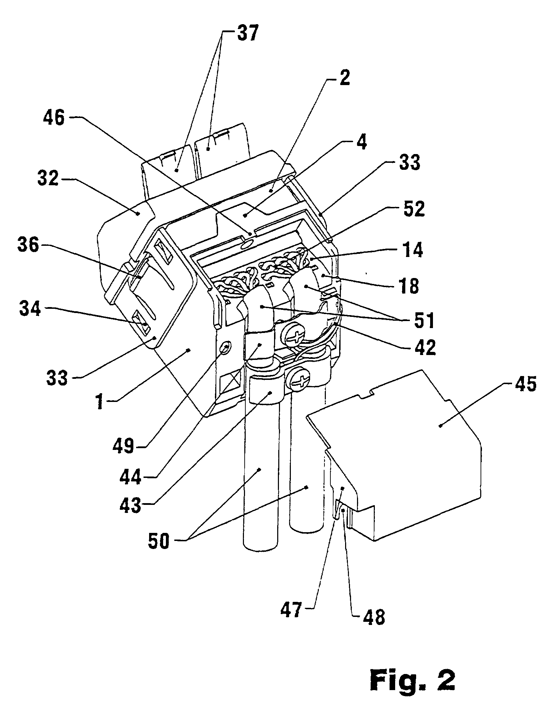

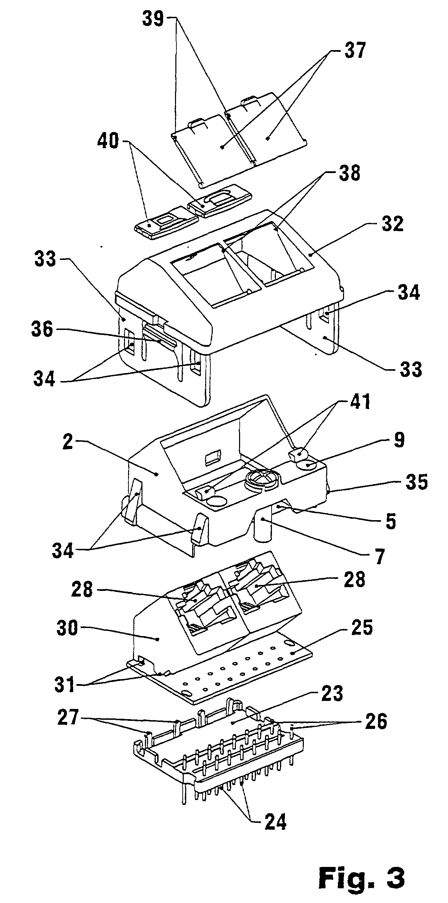

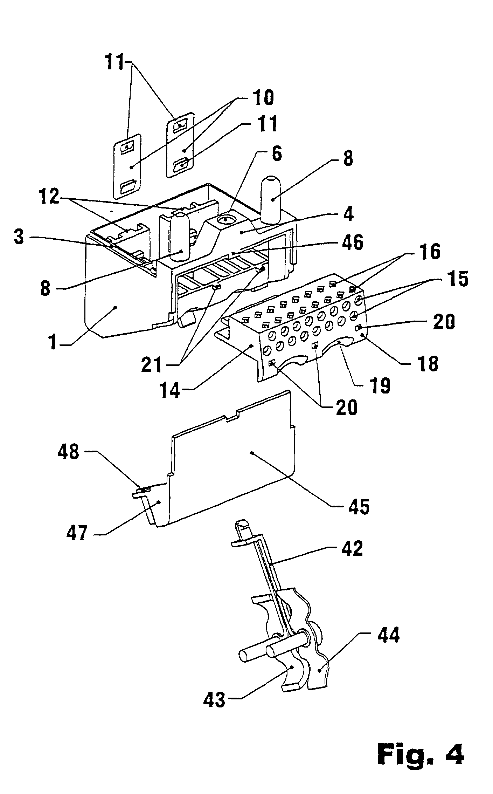

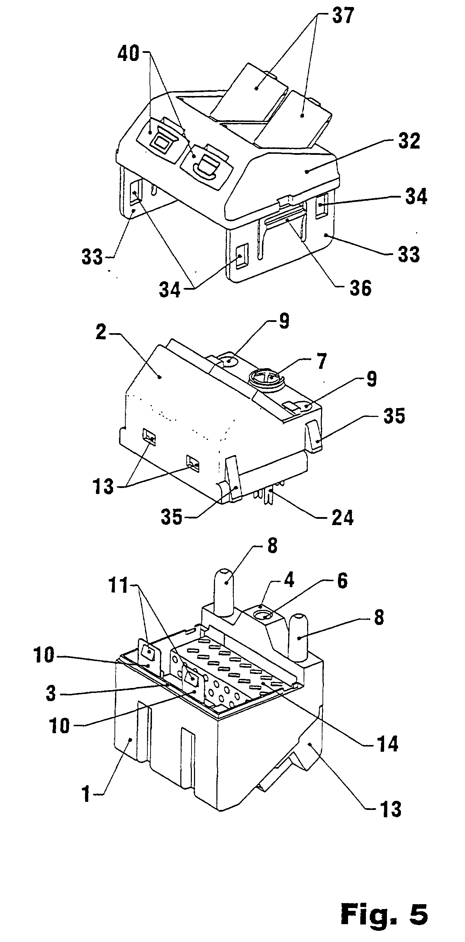

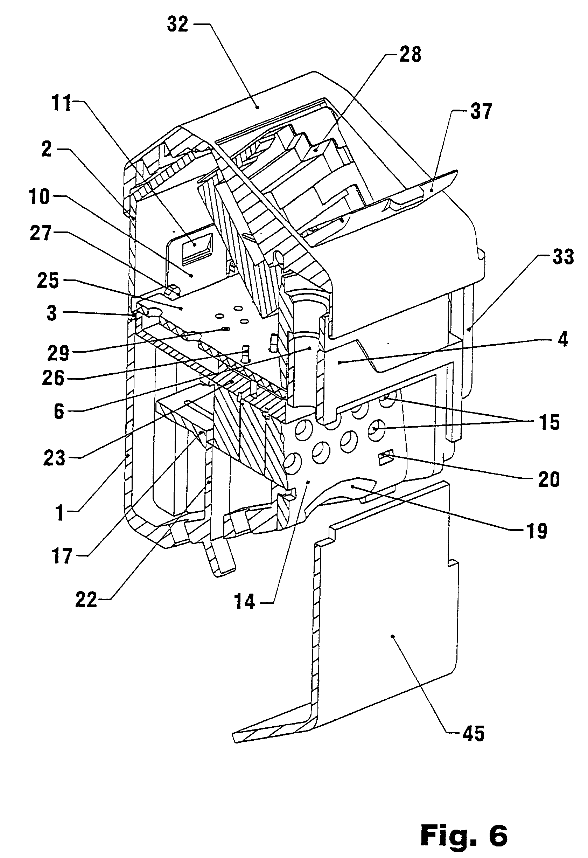

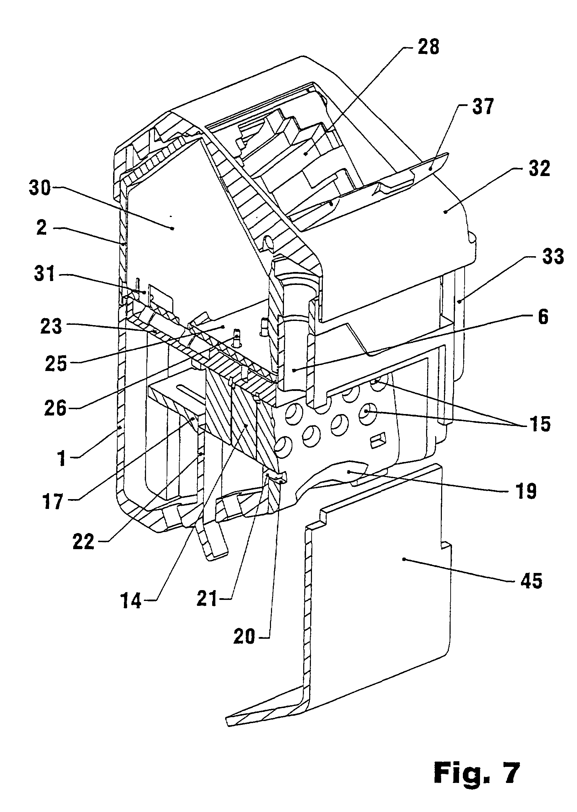

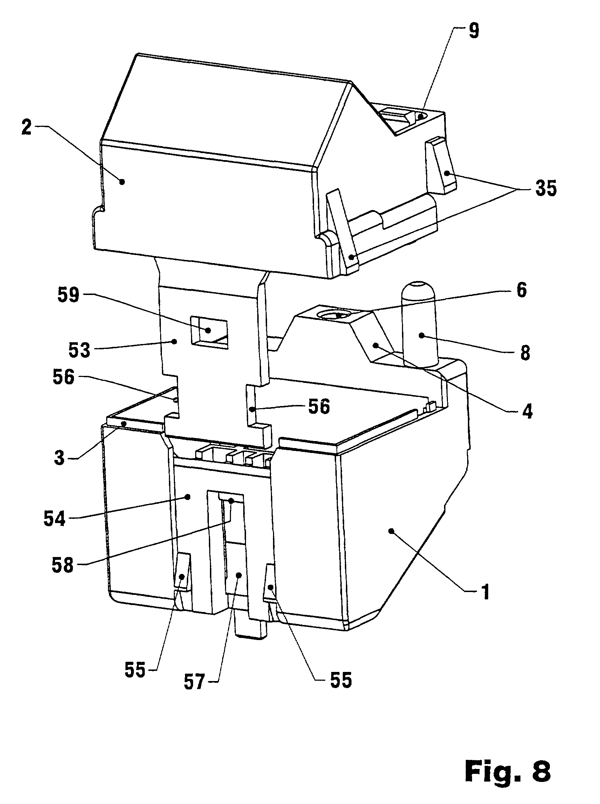

In den Figuren 8 bis 10 ist eine abgewandelte Ausführung der Anschlußdose dargestellt. Es sind nur das Unterteil 1 und das Oberteil 2 gezeigt. Im übrigen stimmt diese Ausführung mit der vorstehend beschriebenen Ausführung der Figuren 1 bis 7 überein, so daß auf die vorangehende Beschreibung verwiesen wird.

Werden das Unterteil 1 und das Oberteil 2 mittels der Schraube 7 zusammengezogen, so dringen die Schneid-Klemmkontakte 24 in den Ladeblock 14 ein und durchschneiden die Isolierung der Adern 52. Das Durchdringen der Isolierung der Adern 52 bietet einen gewissen mechanischen Widerstand. Da die Schraube asymmetrisch außerhalb des Ladeblocks 14 und der Schneid-Klemmkontakte 24 angeordnet ist, kann dieser Widerstand ein auf das Oberteil 2 wirkendes Kippmoment verursachen, welches das Durchdringen der Isolierung der Adern 52 durch die Schneid-Klemmkontakte 24 beeinträchtigen kann.

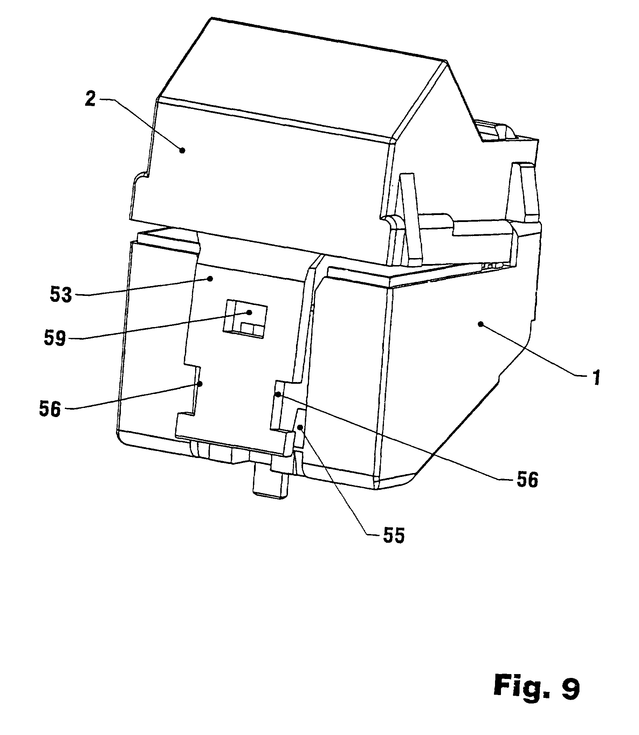

Um einer solchen Beeinträchtigung entgegenzuwirken, ist an der rückwärtigen Längsseite des Oberteils 2 der Schrauben 7 gegenüber eine nach unten vorspringende Lasche 53 angeformt. Die Lasche 53 greift in eine Führungsaussparung 54 der rückwärtigen Längsseite des Unterteils 1. An den beiden Rändern der Führungsaussparung 54 sind Rastnasen 55 angeordnet. Diesen Rastnasen 55 entsprechen seitliche Randausschnitte 56 der Lasche 53. Mittig in Längsrichtung der Führungsaussparung 54 ist eine vertiefte Rinne 57 ausgebildet, die an ihrem oberen Ende eine Abstützkante 58 aufweist. Mittig in der Lasche 53 ist ein Durchbruch 59 vorgesehen, der im wesentlichen mit der Abstützkante 58 der Rinne 57 zur Deckung kommt, wenn das Unterteil 1 und das Oberteil 2 zusammengefügt sind. Bei der Montage wird ausgehend von der in Figur 8 gezeigten Lage das Oberteil 2 auf das Unterteil 1 aufgesetzt. Dabei wird das Oberteil 2 durch die in die Zentrierbohrungen 9 eingreifenden Zentrierzapfen 8 einerseits und durch die in die Führungsaussparung 54 eingreifende Lasche 53 andererseits geführt. Mittels der in die Gewindebohrung 6 eingreifenden Schraube 7 wird das Oberteil 2 gegen das Unterteil 1 gezogen, wobei die Schneid-Klemmkontakte 24 in die Kontaktkanäle 16 des Ladeblokkes 14 eindringen. Der Widerstand beim Durchschneiden der Isolierung der Adern 52 durch die Schneid-Klemmkontakte 24 und die asymmetrische Anordnung von Gewindebohrung 6 und Schraube 7 in Bezug auf den Ladeblock 14 haben zur Folge, daß das Oberteil 2 an der der Schraube 7 entgegengesetzten rückwärtigen Längsseite nicht vollständig auf dem Unterteil 1 aufsitzt, wenn die Schraube 7 vollständig in die Gewindebohrung 6 eingedreht ist. Diese Position zeigt Figur 9.

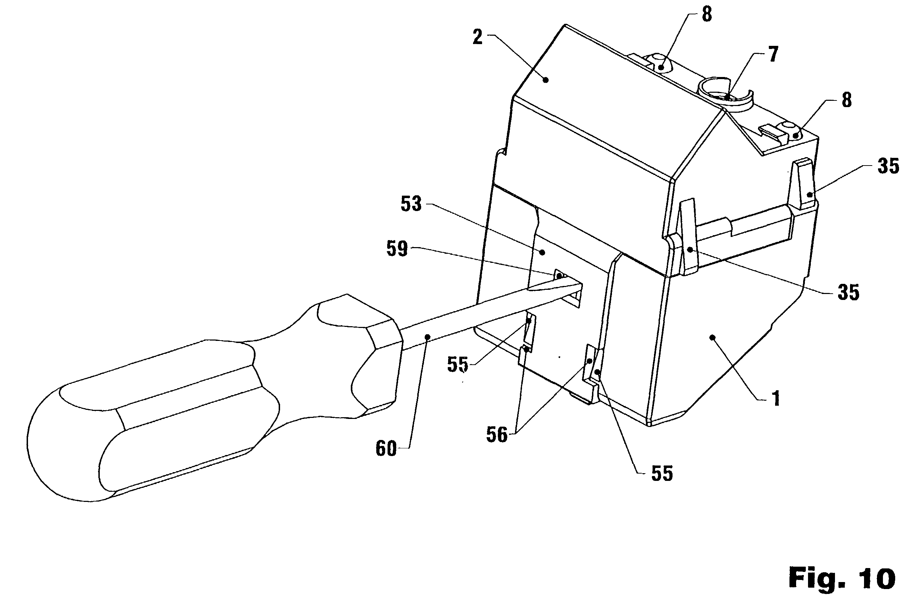

Sobald die Schraube 7 vollständig in die Gewindebohrung 6 eingedreht ist und das Oberteil 2 die in Figur 9 gezeigte Position in Bezug auf das Unterteil 1 eingenommen hat, wird ein Schraubendreher 60 durch den Durchbruch 59 eingeführt, so daß die Spitze des Schraubendrehers 60 in die Rinne 57 eingreift und sich an der Abstützkante 58 abstützt. Der Schraubendreher 60 wird dann nach unten geschwenkt, wie dies in Figur 10 durch den Pfeil angedeutet ist. Das vordere Ende des Schraubendrehers 60 stützt sich dabei an der Abstützkante 58 ab, während sich der Schraubendreher 60 hinter seinem vorderen Ende an der Unterkante des Durchbruchs 59 abstützt. Durch das Verschwenken des Schraubendrehers 60 wird somit die Lasche 53 weiter nach unten gedrückt, bis die Randausschnitte 56 der Lasche 53 hinter den Rastnasen 55 einrasten, wie dies in Figur 10 gezeigt ist. Durch die Hebelwirkung des Schraubendrehers 60 wird der Widerstand überwunden, der verursacht wird, wenn die Schneid-Klemmkontakte 24 die Isolierung der Adern 52 durchschneiden. Sobald die Randausschnitte 56 der Lasche 53 hinter den Rastnasen 55 eingerastet sind, sitzt das Oberteil 2 ringsum dicht auf dem Unterteil 1 auf.

Zum Lösen des Oberteils 2 von dem Unterteil 1 wird der Schraubendreher 60 von unten in die Rinne 57 zwischen die Lasche 53 und das Unterteil 1 eingeschoben, so daß die Lasche 53 unter der Hebelwirkung des Schraubendrehers 60 von der Führungsaussparung 54 abgehoben werden kann und die Randausschnitte 56 von den Rastnasen 55 freikommen.

### BEZUGSZEICHENLISTE

- 1: Unterteil
- 2: Oberteil
- 3: Falz
- 4: abgeschrägter Ansatz
- 5: ausgeformte Ausnehmung
- 6: Gewindebohrung
- 7: Schraube
- 8: Zentrierzapfen
- 9: Zentrierbohrung
- 10: metallische Rastfedern
- 11: herausgebogene Rastnasen
- 12: Aufnahmetaschen
- 13: Rastdurchbrüche
- 14: Ladeblock
- 15: Aufnahmebohrungen
- 16: Kontaktkanäle
- 17: Rastvorsprung
- 18: Kragen
- 19: Aufnahmemulden
- 20: Zentrierdurchbrüche
- 21: Zentriervorsprünge
- 22: Querwand
- 23: Trägerplatte
- 24: Schneid-Klemmkontakte
- 25: Leiterplatte
- 26: Lötpins
- 27: Rasthaken
- 28: Buchsen
- 29: Bohrungen der Leiterplatte
- 30: Abschirmblech
- 31: Zapfen
- 32: Abdeckung
- 33: angeformte Schenkel
- 34: Rastdurchbrüche
- 35: Rastnasen
- 36: abstehende Rastfeder
- 37: Straubschutzklappen
- 38: Vertiefungen
- 39: Rastwarzen
- 40: Kennzeichnungsschilder
- 41: Vorsprünge
- 42: Kunststofflasche
- 43: Zugentlastungsbride
- 44: Schirmbride
- 45: Schirmdeckel
- 46: Nase
- 47: Überlappender Rand
- 48: Ösen
- 49: Gewindebohrungen
- 50: abgeschirmte Kabel
- 51: Kabelschirmung
- 52: Adern
- 53: Lasche
- 54: Führungsaussparung
- 55: Rastnasen
- 56: Randausschnitte
- 57: Rinne
- 58: Abstützkante
- 59: Durchbruch
- 60: Schraubendreher

## Patentansprüche

1. Anschlußdose für abgeschirmte Kabel, insbesondere Datenübertragungskabel mit einem Gehäuse, welches ein Oberteil (2) und ein Unterteil (1) aufweist, die als Metalldruckgußteile gefertigt sind und im zusammengesetzten Zustand elektrisch leitend miteinander in Berührung stehen, mit einer in dem Gehäuse angeordneten Leiterplatte (25), mit wenigstens einer in dem Gehäuse angeordneten und mit der Leiterplatte (25) verbundenen Buchse (28) und mit Anschlußmitteln zum leitenden Anschließen der Adern wenigstens eines abgeschirmten Kabels (50) an die Leiterplatte, dadurch gekennzeichnet, daß die Leiterplatte (25) und die wenigstens eine Buchse (28) in dem Oberteil (2) des Gehäuses angeordnet sind, und daß die Anschlußmittel für die Adern (52) des wenigstens einen Kabels (50) einen Ladeblock (14), in welchen die Adern (52) einführbar sind und welcher in das Unterteil (1) einsetzbar ist, sowie Schneid-Klemmkontakte (24) aufweisen, welche im Oberteil (2) mit der Leiterplatte (25) verbunden angeordnet sind und beim Zusammensetzen von Unterteil (1) und Oberteil (2) in den Ladeblock (14) eindringen und die Adern (52) kontaktieren.

2. Anschlußdose nach Anspruch 1, dadurch gekennzeichnet, daß der Ladeblock (14) Aufnahmebohrungen (15) zum Einführen der Adern (52) und Kontaktkanäle (16) zum Einführen der Schneid-Klemmkontakte (24) aufweist, wobei die Kontaktkanäle (16) senkrecht zu den Aufnahmebohrungen (15) in den Ladeblock (14) führen und wobei die Aufnahmebohrungen (15) und die Kontaktkanäle (16) jeweils untereinander so versetzt angeordnet sind, daß jeweils ein Kontaktkanal (16) eine Aufnahmebohrung (15) im Inneren des Ladeblocks (14) schneidet.

3. Anschlußdose nach Anspruch 2, dadurch gekennzeichnet, daß der Ladeblock (14) in der Weise in das Unterteil (1) einrastbar ist, das die Kontaktkanäle (16) senkrecht zur Trennebene von Unterteil (1) und Oberteil (2) angeordnet sind.

4. Anschlußdose nach Anspruch 3, dadurch gekennzeichnet, daß der Ladeblock (14) seitlich in das Unterteil (1) einschiebbar ist, wobei die Aufnahmebohrungen (15) parallel zur Einschubrichtung des Ladeblocks (14) verlaufen.

5. Anschlußdose nach einem der vorhergehenden Ansprüche, dadurch gekennzeichnet, daß eine Trägerplatte (23) in das Oberteil (2) einsetzbar ist, daß die Leiterplatte (25) von der Trägerplatte (23) getragen wird und daß die Schneid-Klemmkontakte (24) in der Trägerplatte (23) sitzen und mit Lötpins (26) mit der Leiterplatte (25) verbunden sind.

6. Anschlußdose nach Anspruch 5, dadurch gekennzeichnet, daß die Leiterplatte (25) mit der Trägerplatte (23) verrastet ist.

7. Anschlußdose nach Anspruch 5 oder 6, dadurch gekennzeichnet, daß die Trägerplatte (23) mit der Leiterplatte (25) und der wenigstens einen Buchse (28) als Montageeinheit in das Oberteil (2) eingenietet ist.

8. Anschlußdose nach einem der vorhergehenden Ansprüche, dadurch gekennzeichnet, daß das Unterteil (1) und das Oberteil (2) des Gehäuses durch eine einzige Schraubverbindung (6, 7) miteinander verbunden sind.

9. Anschlußdose nach einem der vorhergehenden Ansprüche, dadurch gekennzeichnet, daß das Unterteil (1) und das Oberteil (2) mit Zentriermitteln (8, 9) geführt zusammenfügbar sind.

10. Anschlußdose nach Anspruch 9, dadurch gekennzeichnet, daß die Zentriermittel Zentrierzapfen (8) und korrespondierende Zentrierbohrungen (9) sind.

11. Anschlußdose nach Anspruch 8, dadurch gekennzeichnet, daß das Unterteil (1) und das Oberteil (2) in dem der Schraubverbindung (6, 7) diametral gegenüber liegenden Randbereich miteinander verrastbar sind.

12. Anschlußdose nach einem der vorhergehenden Ansprüche, dadurch gekennzeichnet, daß das Unterteil (1) und das Oberteil (2) an ihrem miteinander in Berührung kommenden Rand mit einem Falz (3) ineinander greifen.

13. Anschlußdose nach einem der vorhergehenden Ansprüche, dadurch gekennzeichnet, daß das wenigstens eine anzuschließenden Kabel (50) an der unteren Bodenseite des Unterteils (1) festgelegt wird und daß das wenigstens eine Kabel (50) bzw. dessen Adern (52) um die Kante des Unterteils (1) herum zu dem Ladeblock (14) geführt sind.

14. Anschlußdose nach Anspruch 13, dadurch gekennzeichnet, daß an dem Ladenblock (14) ein Kragen (18) angeformt ist, der an der Kante des Unterteils (1) zwischen dem Unterteil (1) und dem wenigstens einen Kabel (50) bzw. dessen Adern (52) anliegt.

15. Anschlußdose nach Anspruch 13 oder 14, dadurch gekennzeichnet, daß das wenigstens eine Kabel (50) an der unteren Bodenfläche des Unterteils (1) mittels einer Zugentlastungsbride (43) festgelegt ist.

16. Anschlußdose nach einem der Ansprüche 13 oder 15, dadurch gekennzeichnet, daß das wenigstens eine Kabel (50) mit seiner von dem Isoliermantel befreiten Kabelschirmung (51) mittels einer Schirmbride (44) an der unteren Bodenseite des Unterteils (1) in elektrisch leitendem Kontakt anliegend gehalten wird.

17. Anschlußdose nach einem der Ansprüche 13 oder 16, dadurch gekennzeichnet, daß ein metallischer Schirmdeckel (45) in elektrisch leitendem Kontakt an dem Unterteil (1) befestigbar ist, der zumindest die Adern (52) der anzuschließenden Kabel (50) und die mit den Aufnahmebohrungen (15) versehene Fläche des Ladeblockes (14) abdeckt.

18. Anschlußdose nach Anspruch 11, dadurch gekennzeichnet, daß das Unterteil (1) und das Oberteil (2) mittels einer Lasche (53) verrastbar sind, wobei die Lasche (53) durch ein Werkzeug (60) unter Hebelwirkung in die Raststellung gezogen wird.

## Revendications

1. Boîte de raccordement pour câbles blindés, en particulier câbles de transmission de données, comportant,
- un boîtier, composé d'une partie supérieure (2) et d'une partie inférieure (1), toutes deux en métal coule sous pression et qui, assemblées. sont en contact conducteur de l'électricité,
- dans le boîtier, un circuit imprimé (25) et au moins une douille (28), reliée au circuit (25),
- des moyens pour raccorder électriquement au circuit imprimé. les brins d'au moins un câble blindé (50),
caractérisée en ce que
- le circuit imprimé (25) et la douille (28) au moins unique sont montés dans la partie supérieure (2) du boîtier,
- les moyens de raccordement des brins (52) du câble (50) au moins unique comprennent un bloc de charge (14) dans lequel peuvent être introduits les brins (52) et qui peut être inséré dans la partie infêrieure (1), ainsi que des contacts à coupe (24) montés dans la partie supérieure (2) en liaison avec le circuit imprimé (25) et qui pénètrent dans le bloc (14) pour venir en contact avec les brins (52), quand on assemble 1a partie inférieure (1) et la partie supérieure (2) du boîtier.

2. Boîte de raccordement selon la revendication 1,
caractérisée en ce que
le bloc de charge (14) présente des perçages de réception (15) pour engager les brins (52). et des canaux de contact (16) pour engager des contacts à coupe (24), ces canaux (16) étant disposés à angle droit par rapport aux perçages (15) dans le bloc (14), avec un décalage des canaux (16) entre eux et des perçages (15) entre eux tel que chaque fois un canal de contact (16) coupe un perçage de réception (15) à l'intérieur du bloc (14).

3. Boîte de raccordement selon la revendication 2,
caractérisée en ce que
le bloc de charge (14) peut être bloque dans la partie inférieure (1) de sorte que les canaux de contact (16) sont perpendiculaires au plan de séparation de la partie inférieure (1) et de la partie supérieure (2).

4. Boîte de raccordement selon la revendication 3.
caractérisée en ce que
le bloc de charge (14) peut être introduit par coulissement latéral, dans la partie inférieure (1), les perçages de réception (15) étant parallèles à la direction d'introduction du bloc (14).

5. Boîte de raccordement selon l'une quelconque des revendications précédentes.
caractérisée en ce qu'
une plaque porteuse (23) peut ètre montée dans la partie supérieure (2) et servir de support du circuit imprimé (25), les contacts à coupe (24) étant montés dans la plaque porteuse (23) et reliés au circuit imprimé (25) par des plots de brasage (26),

6. Boîte de raccordement selon la revendication 5.
caractérisée en ce que
le circuit imprimé (25) est enclenché avec la plaque porteuse (23).

7. Boîte de raccordement selon l'une quelconque des revendications 5 ou 6,
caractérisée en ce que
la plaque porteuse (23) avec le circuit imprimé (25) et au moins une douille (28) est, en tant qu unité de montage, fixée par des rivets à la partie supérieure (2).

8. Boîte de raccordement selon l'une quelconque des revendications précédentes,
caractérisée en ce que
la partie inférieure (1) et la partie supérieure (2) du boîtier sont reliées entre elles par une unique liaison à vis (6. 7).

9. Boîte de raccordement selon l'une quelconque des revendications précédentes,
caractérisée en ce que
la partie inférieure (1) et la partie supérieure (2) peuvent être assemblées avec guidage par des moyens de centrage (8, 9).

10. Boîte de raccordement selon la revendication 9.
caractérisée en ce que
les moyens de centrage sont des broches de centrage (8) et des trous de centrage (9) correspondants.

11. °] Boîte de raccordement selon la revendication 8,
caractérisée en ce que
la partie inférieure (1) et la partie supérieure (2) peuvent être enclenchées l'une dans l'autre dans la zone marginale diamétralement opposée à la liaison par vis (6, 7).

12. Boîte de raccordement selon l'une quelconque des revendications précédentes,
caractérisée en ce que
la partie inférieure (1) et la partie supérieure (2), le long de leurs bords qui viennent en contact, sont en prise entre elles par une agrafe (3).

13. Boîte de raccordement selon l'une quelconque des revendications précédentes,
caractérisée en ce que
le câble (50) au moins unique à raccorder est fixé à la face inférieure formant le fond de la partie inférieure (1), et les brins (52) de ce câble (50) sont amenés en contournant le bord de la partie inférieure (1), au bloc de charge (14),

14. Boîte de raccordement selon la revendication 13,
caractérisée en ce que
sur le bloc de charge (14) est moulé un rebord (18), qui se trouve sur le bord de la partle inférieure (1) entre la partie inférieure (1) et le câble (50) ou ses brins (52).

15. Boîte de raccordement selon l'une quelconque des revendications 13 ou 14,
caractérisée en ce que
le câble (50) au moins unique est fixé sur le fond inférieur de la partie inférieure (1), au moyen d'une bride antitraction (43).

16. Boîte de raccordement selon l'une quelconque des revendications 13 ou 15,
caractérisée en ce qu'
le câble (50) au moins unique avec son blindage (54) libéré de son enveloppe isolante, est maintenu appliqué avec contact lectrique, sur le fond inférieur de la partie inférieure (1), au moyen d'une bride de blindage (44).

17. Boîte de raccordement selon l'une quelconque des revendications 13 ou 16.
caractérisée en ce qu'
un couvercle de blindage (45) métallique peut être fixé avec contact électrique sur la partie inférieure (1), en recouvrant au moins les brins (52) du càble (50) à raccorder ainsi que la surface du bloc de charge (14) présentant les perçages de réception (15).

18. Boîte de raccordement selon la revendication 11,
caractérisée en ce que
la partie inférieure (1) et la partie supérieure (2) peuvent être enclenchées l'une sur l'autre par une patte (53) qui peut être amenée à sa position d'enclenchement en utilisant un effet de levier produit par un outil (60).

## Claims

1. A connection box for shielded cables, in particular data transmission cables, with a housing comprising an upper part (2) and a lower part (1), which are, produced as metal diecast parts and in the assembled condition are in electrically conductive contact with one another, with a printed circuit board (25) disposed in the housing, with at least one jack (28) disposed in the housing and connected to the printed circuit board (25) and with connection means for the conductive connection of the wires of at least one shielded cable (50) to the printed circuit board,
**characterised in that** the printed circuit board (25) and the at least one jack (28) are disposed in the upper part (2) of the housing,
**and in that** the connection means for the wires (52) of the at least one cable (50) comprise a charging unit (14), into which the wires (52) can be introduced and which can be inserted into the lower part (1), as well as insulating piercing contacts (24), which are disposed in the upper part (2) connected to the printed circuit board (25) and upon the assembly of lower part (1) and upper part (2) penetrate into the charging unit (14) and contact the wires (52).

2. A connection box according to Claim 1,
**characterised in that** the charging unit (14) comprises location holes (15) for the introduction of the wires (52) and contact channels (16) for the introduction of the insulating piercing contacts (24), the contact channels (16) leading perpendicularly to the location holes (15) into the charging unit (14) and the location holes (15) and the contact channels (16) each being mutually staggered so that in each case a contact channel (16) intersects a location hole (15) in the interior of the charging unit (14).

3. A connection box according to Claim 2,
**characterised in that** the charging unit (14) can be locked into the lower part (1) in such a manner that the contact channels (16) are disposed perpendicularly to the separating plane of lower part (1) and upper part (2).

4. A connection box according to Claim 3,
**characterised in that** the charging unit (14) can be inserted laterally into the lower part (1), the location holes (15) running parallel to the insertion direction of the charging unit (14).

5. A connection box according to one of the preceding Claims,
**characterised in that** a base plate (23) can be inserted into the upper part (2),
**in that the** printed circuit board (25) is carried by the base plate (23)
**and in that** the insulation piercing contacts (24) are seated in the base plate (23) and are connected to the printed circuit board (25) by soldering pins (26).

6. A connection box according to Claim 5,
**characterised in that** the printed circuit board (25) is locked to the base plate (23).

7. A connection box according to Claim 5 or 6,
**characterised in that** the base plate (23) with the printed circuit board (25) and the at least one jack (28) is rívetted as an assembly unit into the upper part (2).

8. A connection box according to one of the preceding Claims,
**characterised in that** the lower part (1) and the upper part (2) of the housing are connected to one another by a single screw connection (6, 7).

9. A connection box according to one of the preceding Claims,
**characterised in that** the lower part (1) and the upper part (2) can be joined by guidance by centring means (8, 9).

10. A connection box according to Claim 9,
**characterised in that** the centring means are centring pegs (8) and corresponding centring holes (9).

11. A connection box according to Claim 8,
**characterised in that** the lower part (1) and the upper part (2) can be locked to one another in the edge region lying diametrally opposite the screw connection (6, 7).

12. A connection box according to one of the preceding Claims,
**characterised in that** the lower part (1) and the upper part (2) engage in one another by a notch (3) at their edge coming into contact with one another.

13. A connection box according to one of the preceding Claims,
**characterised in that** the at least one cable (50) to be connected is fixed to the lower bottom side of the lower part (1)
**and in that** the at least one cable (50) and respectively its wires (52) are passed around the edge of the lower part (1) to the charging unit (14).

14. A connection box according to Claim 13,
**characterised in that** moulded on the charging unit. (14) is a collar (18), which abuts the edge of the lower par (1) between the lower part (1) and the at least one cable (50) and respectively its wires (52).

15. A connection box according to Claim 13 or 14,
**characterised in that** the at least one cable (50) is fixed to the lower bottom face of the lower part (1) by means of a strain relief strap (43).

16. A connection box according to one of Claims 13 or 15,
**characterised in that** the at least one cable (50) with its cable shielding (51) minus the insulating casing is retained by means of a shielding strap (44) abutting the lower bottom side of the lower part (1) in electrically conductive contact therewith.

17. A connection box according to one of Claims 13 or 16,
**characterised in that** a metal shielding cover (45) can be fixed in electrically conductive contact to the lower part (1), and covers at least the wires (52) of the cables (50) to be connected and the face of the charging unit (14) provided with the location holes (15).

18. A connection box according to Claim 11,
**characterised in that** the lower part (1) and the upper part (2) can be locked by means of a bracket (53), the bracket (53) being pulled by a tool (60) by lever action into the locking position.
